# EUROPÄISCHE PATENTSCHRIFT

(11) **EP 3 133 176 B1**
(45) Veröffentlichungstag und Bekanntmachung des Hinweises auf die Patenterteilung: **15.04.2020**
(21) Anmeldenummer: 16184442.8
(22) Anmeldetag: 17.08.2016
(51) Int. Cl.: C22B 7/00, C22B 21/00, B07C 5/36, B07C 5/344

(54) **SORTIERUNG VON ALUMINIUMLEGIERUNGEN ANHAND ELEKTRISCHER LEITFÄHIGKEITSWERTE**
SORTING OF ALUMINIUM ALLOYS USING ELECTRICAL CONDUCTIVITY VALUES
TRI D'ALLIAGES D'ALUMINIUM AU MOYEN DE VALEURS DE CONDUCTIVITE ELECTRIQUE

(30) Priorität: 17.08.2015 DE 102015113570
(43) Veröffentlichungstag der Anmeldung: 22.02.2017
(73) Patentinhaber: Hydro Aluminium Recycling Deutshland GmbH, 41542 Dormagen (DE)
(72) Erfinder: Kurth, Boris, 41564 Kaarst (DE); Kurth, Gregor, 41466 Neuss (DE)
(74) Vertreter: Rausch Wanischeck-Bergmann Brinkmann

(56) Entgegenhaltungen:
- WO-A1-2009/152290
- US-A- 5 133 505
- Stefan Mutz ET AL: "SORTING OF ALUMINUM AND ITS ALLOYS WITHIN THE EUROPEAN AUTOMOBILE RECYCLING", , 1. Januar 2005 (2005-01-01), Seiten 3-6, XP055312932, Gefunden im Internet: URL:http://library.tee.gr/digital/m2045/m2 045_mutz.pdf [gefunden am 2016-10-21]
- DATABASE WPI Week 201077 Thomson Scientific, London, GB; AN 2010-J28961 XP002763252, & ES 2 342 350 A1 (CARDOSO SATURNINO C J) 5. Juli 2010 (2010-07-05)

## Beschreibung

Die vorliegende Erfindung betrifft ein Verfahren und eine Vorrichtung zur Sortierung von unterschiedlichen Legierungen bei Aluminiumschrotten.

Aluminiumschrott wird in der Regel zerkleinert. Verunreinigungen können aussortiert werden oder es können Trennungen beziehungsweise Aussortierungen von nichtmetallischen oder fremdmetallischen Elementen durchgeführt werden. Eine Sortierung von Aluminiumschrott ist grundsätzlich auch möglich, wenn diese aufgrund ihrer metallischen Zusammensetzung und/oder messbarer hoher Dichteunterschiede voneinander differenzierbar sind. So können beispielsweise Legierungen mit höheren Zink-, Kupfer-, Eisen- oder Bleianteilen leicht erkannt werden. Bei geringen Dichteunterschieden ist eine Sortierung zu ungenau.

Im Bereich der industriellen Aluminiumschrottverwertung treten große Masseströme auf, die im Bereich mehrerer Tonnen pro Stunde liegen können. Derzeit können Aluminiumlegierungen nicht beliebig sortiert werden. Beispielsweise können Legierungsgemische der Legierungsgruppe 5000 und 6000 nicht voneinander getrennt werden.

Aus der WO 2009/152290 A1 ist ein Verfahren zur Rückgewinnung von Metall aus einem Abfallstrom bekannt. Danach kommen insbesondere induktiv arbeitende dynamische Sensoren einerseits sowie Wirbelstromseparatoren andererseits zum Einsatz, die jeweils dazu dienen, bestimmte Metalle aus dem Materialstrom auszuschleusen. Dabei dient insbesondere der Wirbelstromseparator dazu, Aluminium aus einem Materialstrom herauszutrennen, der ansonsten noch Steine, Glas, schwere Kunststoffe, Polyvinylchloride und feine Kabel beinhaltet.

Aus Stefan Mutz et al: "Sorting of aluminium and its alloys within the European automobile recycling", 1. Januar 2005, sind unterschiedliche Sortierverfahren bekannt. Dabei ist bezüglich der Sortierung von Nichteisenmetallen angegeben, dass deren Separation insbesondere dann schwierig sein kann, wenn deren charakteristischen Eigenschaften wie zum Beispiel die elektrische Leitfähigkeit sehr ähnlich sind.

Aus der ES 2 342 350 A1 ist ferner ein Verfahren zur Aussortierung von Metall und Nichteisenmetall aus einem Abfallstrom bekannt, demgemäß eine Metalldetektor mit einem Wirbelstromgenerator zum Einsatz kommt. Dabei dient der Wirbelstromgenerator dazu, den Materialstrom in Metalle einerseits und Nicht-Metalle andererseits zu unterteilen.

Ausgehend vom vorbeschriebenen Stand der Technik liegt der vorliegenden Erfindung die **Aufgab**e zugrunde, ein Verfahren und eine Vorrichtung bereitzustellen, mit welchem eine Sortierung von Aluminiumlegierungen ermöglicht wird.

Zur technischen **Lösung** dieser Aufgabe schlägt die Erfindung ein Verfahren mit den Merkmalen des Anspruches 1 vor. Weitere Vorteile und Merkmale ergeben sich aus den Unteransprüchen.

Vorrichtungsseitig wird eine Vorrichtung mit den Merkmalen des Anspruches 8 vorgeschlagen. Auch hier ergeben sich weitere Vorteile und Merkmale aus den darauf folgenden Unteransprüchen.

Erfindungsgemäß ist vorgesehen, die Aluminiumschrotte und deren Legierungen anhand ihrer elektrischen Leitfähigkeit zu unterscheiden. So ist festgestellt worden, dass unterschiedliche Aluminiumlegierungen auch unterschiedliche elektrische Leitfähigkeiten aufweisen.

Die elektrische Leitfähigkeit, auch als Konvektivität bezeichnet, betrifft die Fähigkeit eines Materials, elektrischen Strom zu leiten. Die Leitfähigkeit wird in Siemens pro Meter - S/m - angegeben. Es gibt einen internationalen Standard, der sich auf ein Kupfermuster bezieht, IACS. Üblicherweise wird zur Messung der elektrischen Leitfähigkeit eine Wirbelstromtechnik angewandt.

Mit der Erfindung wird der Umstand genutzt, dass unterschiedliche Aluminiumlegierungen unterschiedliche elektrische Leitfähigkeiten aufweisen. Auf diese Weise ist es möglich, die Aluminiumschrotte voneinander zu differenzieren.

Gemäß der Erfindung werden die Aluminiumschrotte zerkleinert. Als gut sortierbar hat sich eine Körnungsgrößen von > 10 mm bis 80 mm ergeben, wobei es sich dabei um grobe Durchmesserwerte beziehungsweise Kantenlängen handelt. Der Aluminiumschrott liegt gewissermaßen in Plättchen der entsprechenden Größe vor.

Gemäß der Erfindung kann der Schrott beziehungsweise können die Teile vereinzelt werden. Es kommt dann zu dem Kontakt mit einem Sensor zur Messung der elektrischen Leitfähigkeit. Der Messwert wird einer Steuervorrichtung zugeleitet. Darüber hinaus wird noch die Position des Aluminiumteils in Bezug auf die gesamte Fördereinheit identifiziert, beispielsweise mittels einer Hochgeschwindigkeitskamera. Es erfolgt dann die Sortierungsentscheidung und -umsetzung. Dies kann zum Beispiel durch pneumatisches Ausschießen der nicht gewünschten Legierung, durch Wegführung oder dergleichen erfolgen.

Gemäß einem vorteilhaften Vorschlag der Erfindung ist die Messeinrichtung beispielsweise als leistenförmiges Sensorfeld in einen Förderweg eingebracht, so dass die zu messenden Teile darüber hinweg geführt werden können und Kontakt mit dem Sensor herstellen.

Erfindungsgemäß können große Massenströme im industriellen Maßstab bearbeitet werden.

Vorrichtungsseitig umfasst die Vorrichtung einen Förderweg, Messkontakte sowie eine Separierstation, wobei die Messkontakte wenigstens aus einem Sensor zur Messung der elektrischen Leitfähigkeit bestehen. Darüber hinaus ist eine Steuerung vorgesehen, die sowohl das Messergebnis interpretiert als auch die Weiterführungsentscheidung trifft und durch Ansteuerung entsprechender Elemente umsetzt. So können pneumatischen Düsen, Weichen, Öffnungen und dergleichen verwendet werden, um Teile auf einem Weg zu halten oder von diesem zu entfernen.

Mit der Erfindung wird ein einfach umsetzbares aber höchst verlässliches System zur Sortierung von Aluminiumschrotten bereitgestellt, welches mit überschaubarem wirtschaftlichem Aufwand auch zur Verwendung bei großen Masseströmen verwendet werden kann und darüber hinaus auch Legierungen sortiert, welche nach dem Stand der Technik nicht voneinander zu trennen sind.

Weitere Vorteile und Merkmal der Erfindung ergeben sich aus der folgenden Beschreibung anhand der einzigen Figur, die in rein schematischer Darstellung eine erfindungsgemäße Verfahrensdurchführung mittels einer erfindungsgemäßen Vorrichtung zeigt.

Die erfindungsgemäße Vorrichtung zur Sortierung von Aluminiumschrotten verfügt über eine Sortierkammer 11. Dieser wird eingangsseitig Aluminiumschrott zugeführt, und zwar mittels einer Materialzufuhr 1, die im gezeigten Ausführungsbeispiel als Förderband ausgebildet ist.

Die Sortierkammer 11 stellt eingangsseitig eine Messstation 3 bereit, die Messkontakte aufweist, die zur Messung der elektrischen Leitfähigkeit ausgerüstet sind. Insoweit kann die Messstation 3 auch als Sensoreinheit bezeichnet werden.

Im gezeigten Ausführungsbeispiel ist zwischen der Materialzufuhr 1 und der Messstation 3 eine Vergleichmässigungseinrichtung 2 zwischengeschaltet. Bei dieser Vergleichmässigungseinrichtung 2 kann es sich beispielsweise um eine Vibrationsrinne handeln. Sinn und Zweck dieser Vergleichmässigungseinrichtung 2 ist es, das mittels der Materialzufuhr 1 der Sortierkammer 11 aufgegebene Material zu vereinzeln und zu homogenisieren, so dass eine optimierte Messung der elektrischen Leitfähigkeit mittels der Messstation 3 erfolgen kann. So ist es insbesondere erwünscht, dass im Weiteren hinsichtlich ihrer elektrischen Leitfähigkeit zu messende Aluminiumschrottpartikel nicht übereinanderliegend auf die Messstation 3 aufgegeben werden, was mittels der Vergleichmässigungseinrichtung 2 erreicht wird.

Die erfindungsgemäße Vorrichtung verfügt desweiteren über eine Positionserfassungseinheit 4. Diese verfügt beispielsweise über eine oder mehrere Hochgeschwindigkeitskameras und/oder ein Röntgenerfassungssystem. Sinn und Zweck der Positionserfassungseinheit 4 ist es, die hinsichtlich ihrer elektrischen Leitfähigkeit detektierten Aluminiumschrottpartikel in ihrer jeweiligen Position zu erfassen.

Der Messstation 3 folgt ein Förderband 5 nach, auf das die messtechnisch erfassten Schrottpartikel aufgegeben werden. Optional kann eine weitere Positionserfassungseinheit 12 vorgesehen sein, die mit dem Förderband 5 zusammenwirkt, so dass eine alternative oder ergänzende Positionsbestimmung der Aluminiumschrottpartikel stattfinden kann.

An das Förderband 5 schließt sich im weiteren Förderweg der Aluminiumschrottpartikel ein Düsenmodul 7 an, das mit einem Druckluftspeicher 6 zusammenwirkt. Dieses Düsenmodul 7 verfügt über eine Mehrzahl von Druckluftdüsen, die bevorzugterweise hinsichtlich ihrer Druckluftabgaberichtung einstellbar ausgebildet sind und mithin bedarfsgerecht verfahren werden können.

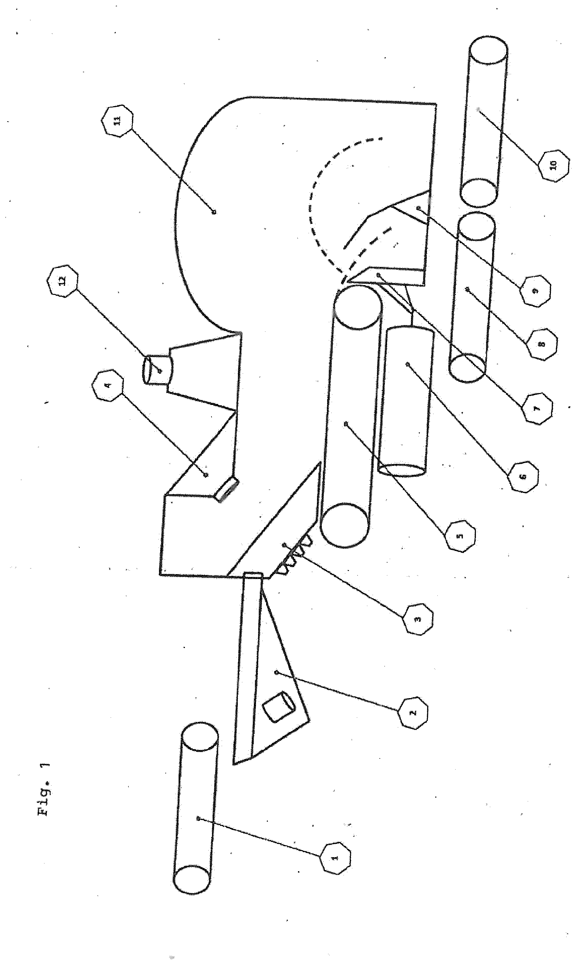

Das Düsenmodul 7 dient dazu, einzelne Aluminiumschrottpartikel, die das Förderband 5 verlassen, gezielt einem Druckluftstrom auszusetzen, so dass mittels des Düsenmoduls 7 eine Separierung des Aluminiumschrotts vorgenommen werden kann, so dass eine Aussortierung von Störstoffen möglich ist. Dabei erfolgt die zielgerichtete Aussortierung von Störstoffen dadurch, dass in Kenntnis der zuvor detektierten elektrischen Leitfähigkeit und der erfassten Position ein zielgerichteter Druckluftstoß mittels des Düsenmoduls 7 auf auszusortierende Partikel abgegeben werden kann. Gemäß der Darstellung nach Fig. 1 bezeichnet die zum Förderband 10 reichende Strichlinie die Wurfparabel für den Störstoff, wohingegen die zum Förderband 8 weisende Strichlinie die Wurfparabel für den wünschenswerterweise auszusortierenden Wertstoff darstellt. Räumlich voneinander getrennt sind diese beiden Wurfparabeln mittels eines Trennscheitels 9, welcher der Trennung der beiden voneinander separierten Qualitäten dient. Die so voneinander getrennten beziehungsweise separierten Qualitäten werden alsdann mit den Förderbändern 9 beziehungsweise 10 abtransportiert.

Die Messung der elektrischen Leitfähigkeit der einzelnen Aluminiumschrottpartikel mittels der Messstation 3 gestattet es, einzelne Aluminiumlegierungen voneinander zu unterscheiden. So ist es insbesondere möglich, 5000er-Aluminiumlegierungen von 6000er-Aluminiumlegierungen zu unterscheiden. Aber auch innerhalb einer Legierungsgruppen können im Bedarfsfall Unterschiede gemacht werden, so dass es möglich ist, eine Separierung auch innerhalb der 5000er Legierungsgruppe als auch innerhalb der 6000er Legierungsgruppe vornehmen zu können. Selbstredend können auch andere Aluminiumlegierungsgruppen voneinander differenziert werden.

Der Sortierkammer 11 wird mittels der Materialzufuhr 1 vorbereiteter Aluminiumschrott zugeführt. Bevorzugterweise ist dieser vorbereitete Aluminiumschrott in einem Vorverfahren mechanisch aufbereitet worden. So kann insbesondere vorgesehen sein, dass als Ausgangsmaterial verwendeter Aluminiumschrott zunächst zerkleinert und der zerkleinerte Aluminiumschrott einer Siebanlage zugeführt wird. Mittels einer solchen Siebanlage wird der zerkleinerte Aluminiumschrott in eine Fraktion aus Unterkornmaterialien einerseits und einer Fraktion aus Überkornmaterialien andererseits unterteilt. Die Fraktion aus Überkornmaterialien stellt den mechanisch vorbereiteten Aluminiumschrott dar, der dann mittels der Materialzufuhr 1 der Sortierkammer 11 zugeführt wird. Sinn und Zweck der Aluminiumschrottvorbereitung ist es, Aluminiumschrottpartikel zu erhalten, die eine auch im Massenstrom zuverlässige Detektierung der elektrischen Leitfähigkeit einzelner Aluminiumschrottpartikel mittels der Messstation 3 gestatten. Es ist insoweit angestrebt, dass die Aluminiumschrottpartikel, die der Messstation 3 zugeführt werden, eine Korngröße von 10 mm bis 80 mm aufweisen. Die mittels der Messstation 3 erfassten elektrischen Leitfähigkeiten der einzelnen auf die Messstation 3 aufgegebenen Aluminiumschrottpartikel gestattet es, eine Differenzierung nach vorhandenen Legierungen vorzunehmen. Insbesondere ist es möglich, Aluminiumschrott der 5000er Gruppe von Aluminiumschrotten der 6000er Gruppe zu unterscheiden. Der insoweit mittels der Messstation 3 je Aluminiumschrottpartikel erfasste Messwert wird an eine in der Figur nicht näher dargestellte Steuervorrichtung geleitet. Gleichzeitig wird mittels der Positionserfassungseinheit 4 die genaue Position eines jeden Aluminiumschrottpartikels erfasst, welche Positionsinformation der Steuervorrichtung ebenfalls mitgeteilt wird. Es sind insoweit je Aluminiumschrottpartikel die jeweils detektierte elektrische Leitfähigkeit einerseits sowie die genaue Position andererseits bekannt. Dies gestattet es, im weiteren Verfahrensgang einzelne Aluminiumschrottpartikel mittels des Düsenmoduls 7 lufttechnisch zu erfassen und gezielt auszuschleusen. Im gezeigten Ausführungsbeispiel erfolgt eine Trennung in zwei Fraktionen. Es ist selbstredend möglich, auch eine weitergehende Differenzierung vorzunehmen und gegebenenfalls drei, vier oder noch mehr Fraktionen zu bilden. Die erfindungsgemäße Ausgestaltung gestattet es nämlich, Partikel einer bestimmten Zusammensetzung sicher ausfindig zu machen und aussortieren zu können, wobei als Aussortierungskriterium die physikalische Größe der elektrischen Leitfähigkeit verwendet wird, die hinsichtlich insbesondere der Legierungszusammensetzung von Aluminiumschrott charakteristisch ist. Dies gestattet es in vorteilhafter Weise, hinsichtlich der aussortierten Endprodukte einen Reinheitsgrad zu erzielen, der mit aus dem Stand der Technik bislang bekannten Verfahren nicht möglich ist.

### Bezugszeichenliste

- 1: Materialzufuhr (Förderband)
- 2: Vergleichmässigungseinrichtung (Vibrationsrinne)
- 3: Messstation (Sensoreinheit)
- 4: Positionserfassungseinheit (Hochgeschwindigkeitskamera und/oder Röntgensystem)
- 5: Förderband
- 6: Druckluftspeicher
- 7: Düsenmodul
- 8: Förderband
- 9: Trennscheitel
- 10: Förderband
- 11: Sortierkammer
- 12: weitere Positionserfassungseinheit

## Patentansprüche

1. Verfahren zur Sortierung von Aluminiumlegierungen im Aluminiumschrott,
**dadurch gekennzeichnet,**
**dass** die Aluminiumschrotte einer Messstation zugeführt, dort ein Kontakt zwischen den Aluminiumschrotten und einem Sensor zur Messung der elektrischen Leitfähigkeit hergestellt, die elektrische Leitfähigkeit der Aluminiumschrotte gemessen und in Abhängigkeit vom Messergebnis die Aluminiumschrotte auf einem dafür vorgesehenen Weg weitergeführt werden.

2. Verfahren nach Anspruch 1, **dadurch gekennzeichnet, dass** die Aluminiumschrotte zerkleinert werden.

3. Verfahren nach Anspruch 2, **dadurch gekennzeichnet, dass** die Aluminiumschrotte vergleichmäßigt werden.

4. Verfahren nach Anspruch 3, **dadurch gekennzeichnet, dass** vor der Sortierung Aluminiumschrotte definierter Größe ausgeschleust werden.

5. Verfahren nach einem der vorhergehenden Ansprüche, **dadurch gekennzeichnet, dass** die Aluminiumschrotte in Abhängigkeit vom Messergebnis separiert werden.

6. Verfahren nach einem der vorhergehenden Ansprüche, **dadurch gekennzeichnet, dass** die Aluminiumschrotte in Abhängigkeit vom Messergebnis mittels Druckluft weggeblasen werden.

7. Verfahren nach einem der vorhergehenden Ansprüche, **dadurch gekennzeichnet, dass** Kontakte zur Messung der elektrischen Leitfähigkeit in den Förderweg eingebracht werden.

8. Vorrichtung zur Durchführung des Verfahrens nach einem der Ansprüche 1 bis 7, **gekennzeichnet durch** eine Fördervorrichtung, Messkontakte und eine Separierstation, **dadurch gekennzeichnet, dass** die Messkontakte zur Messung der elektrischen Leitfähigkeit ausgerüstet sind.

9. Vorrichtung nach Anspruch 8, **dadurch gekennzeichnet, dass** diese eine Steuereinheit aufweist, welche in Abhängigkeit vom Messergebnis die Separierung der Aluminiumschrotte steuert.

10. Vorrichtung nach einem der Ansprüche 8 oder 9, **dadurch gekennzeichnet, dass** die Messkontakte in den Förderweg derart eingebracht sind, dass die Aluminiumschrotte darüber hinwegführbar sind.

## Claims

1. A method for sorting aluminium alloys in aluminium scrap,
**characterized in**
**that** the aluminium scraps are supplied to a measuring station, a contact between the aluminium scraps and a sensor for measuring the electric conductivity is established there, the electric conductivity of the aluminium scraps is measured and in dependence on the measurement result the aluminium scraps will be transported onwards on a track provided for this.

2. A method according to claim 1, **characterized in that** the aluminium scraps will be crushed.

3. A method according to claim 2, **characterized in that** the aluminium scraps will be homogenized.

4. A method according to claim 3, **characterized in that** aluminium scraps having a defined size are unloaded before sorting.

5. A method according to one of the preceding claims, **characterized in that** the aluminium scraps are separated in dependence on the measurement result.

6. A method according to one of the preceding claims, **characterized in that** the aluminium scraps are blown away by means of compressed air in dependence on the measurement result.

7. A method according to one of the preceding claims, **characterized in that** contacts for measuring the electric conductivity are inserted in the conveying path.

8. A device for carrying out the method according to one of the claims 1 through 7, **characterized by** a conveyor, measuring contacts and a separating station, **characterized in that** the measuring contacts are equipped for measuring the electric conductivity.

9. A device according to claim 8, **characterized in that** this one comprises a control unit which controls the separation of the aluminium scraps in dependence on the measurement result.

10. A device according to one of the claims 8 or 9, **characterized in that** the measuring contacts are inserted in the conveying path such that the aluminium scraps can be guided over them.

## Revendications

1. Procédé de triage des alliages d'aluminium dans des débris d'aluminium,
**caractérisé en**
**ce que** les débris d'aluminium sont amenés à une station de mesure, là-bas un contact entre les débris d'aluminium et un capteur destiné à mesurer la conductivité électrique est établi, la conductivité électrique des débris d'aluminium est mesurée et en fonction du résultat de mesure les débris d'aluminium sont acheminés sur une voie prévue pour ceux-ci.

2. Procédé selon la revendication 1, **caractérisé en ce que** les débris d'aluminium sont broyés.

3. Procédé selon la revendication 2, **caractérisé en ce que** les débris d'aluminium sont homogénéisés.

4. Procédé selon la revendication 3, **caractérisé en ce que** des débris d'aluminium ayant une taille défini sont évacués avant le triage.

5. Procédé selon l'une des revendications précédentes, **caractérisé en ce que** les débris d'aluminium sont séparés en fonction du résultat de mesure.

6. Procédé selon l'une des revendications précédentes, **caractérisé en ce que** les débris d'aluminium sont soufflés par moyen d'air comprimé en fonction du résultat de mesure.

7. Procédé selon l'une des revendications précédentes, **caractérisé en ce que** des contacts destinés à mesurer la conductivité électrique sont incorporés dans le trajet de transport.

8. Dispositif destiné à effectuer le procédé selon l'une des revendications 1 à 7, **caractérisé par** un convoyeur, des contacts de mesure et une station de séparation, **caractérisé en ce que** les contacts de mesure sont équipés pour mesurer la conductivité électrique.

9. Dispositif selon la revendication 8, **caractérisé en ce que** celui-ci comprend une unité de commande, qui commande la séparation des débris d'aluminium en fonction du résultat de mesure.

10. Dispositif selon l'une des revendications 8 ou 9, **caractérisé en ce que** les contacts de mesure sont incorporés dans le trajet de transport, de sorte que les débris d'aluminium peuvent être guidés sur ceux-ci.
